# EUROPEAN PATENT SPECIFICATION

(11) **EP 0 999 617 B1**
(45) Date of publication and mention of the grant of the patent: **26.03.2003**
(21) Application number: 99120989.1
(22) Date of filing: 04.11.1999
(51) Int. Cl.: H01R 33/94, B60Q 1/26

(54) **Lighting device, in particular for vehicles**
Beleuchtungseinrichtung, insbesondere für Fahrzeuge
Dispositif d'éclairage, notamment pour véhicules

(30) Priority: 06.11.1998 IT MI982420
(43) Date of publication of application: 10.05.2000
(73) Proprietor: Automotive Lighting Italia Spa, 10078 Venaria Reale (Torino) (IT)
(72) Inventor: Canavesio, Sergio, 10044 Pianezza (IT); Crema, Alessandro, 10093 Collegno (IT); Padovan, Marco, 10036 Settimo Torinese (IT)
(74) Representative: Cerbaro, Elena, Dr.

(56) References cited:
- EP-A- 0 109 297
- EP-A- 0 773 138
- EP-A- 0 803 942
- EP-A- 0 817 328
- US-A- 5 399 103

## Description

The present invention relates to a lighting device, in particular for vehicles, for example a light for the third stop unit.

It is known that devices of this type have a plurality of lamps, which are accommodated in a support body, and are connected electrically to an external supply line, via an internal supply circuit.

The internal supply circuit, which is supported by the support body, is provided with a pair of terminals.

A connector, which is disposed at one end of the external supply line, is locked such that a pair of contacts of the connector itself can communicate with the terminals of the internal supply circuit.

The electrical connection is provided by welding the terminals of the internal supply circuit to the contacts of the connector.

A disadvantage which is associated with devices of this type concerns the production of the electrical connection between the internal circuit and the external supply line.

In particular, the welding requires a production process which is complex and costly to carry out, and which, in short, makes fitting of the device onto the car unsuitable for being implemented automatically.

In addition, any maintenance work which may have to be carried out, such as replacement of the devices, is rendered laborious, and requires a considerable amount of time. The drawback descrived is still present in EP-A-773138.

The object of the present invention is to provide a lighting device which is without the disadvantages described, and which, in particular, is simple and economical to produce.

According to the present invention, a lighting device is thus provided, in particular a third stop light for vehicles, as claimed in claim 1.

The advantages which are provided by a lighting device produced according to the invention, are apparent from the foregoing description.

Firstly, use of a connector with sliding contacts makes superfluous the welding operations for the electrical connection between the internal supply circuit and the external supply line.

Thus, fitting of the lighting device on the car is simplified, and is more suitable for being carried out by means of automated processes.

Consequently, a first economic advantage is obtained.

In addition, maintenance operations also, such as replacement of a broken or damaged device, are facilitated, since the connection of the device itself to the supply line can be interrupted and restored, simply by removing and reinserting the connector.

In order to assist understanding of the present invention, a preferred embodiment is described hereinafter, purely by way of non-limiting example, with reference to the attached drawings, in which:
- figure 1 is a partial front elevated view of a lighting device produced according to the present invention, in which
- figure 2 is a plan view of a disassembled detail of the device in figure 1;
- figure 3 is a rear elevated view of the detail in figure 2, when assembled;
- figure 4 is a lateral elevated view, in cross-section according to a plane IV-IV of the assembled detail in figure 2;
- figure 5 is a plan view, in cross-section according to a plane V-V, of the assembled detail in figure 2;
- figure 6 is a lateral elevated view of the detail in figure 2, when disassembled, and represented in the stamping position;
- figure 7 is a lateral elevated view, partially in cross-section, of the assembled detail in figure 2; and
- figure 8 is a lateral elevated view, in cross-section according to a plane VIII-VIII, of the device in figure 1, shown only partially, for the sake of convenience.

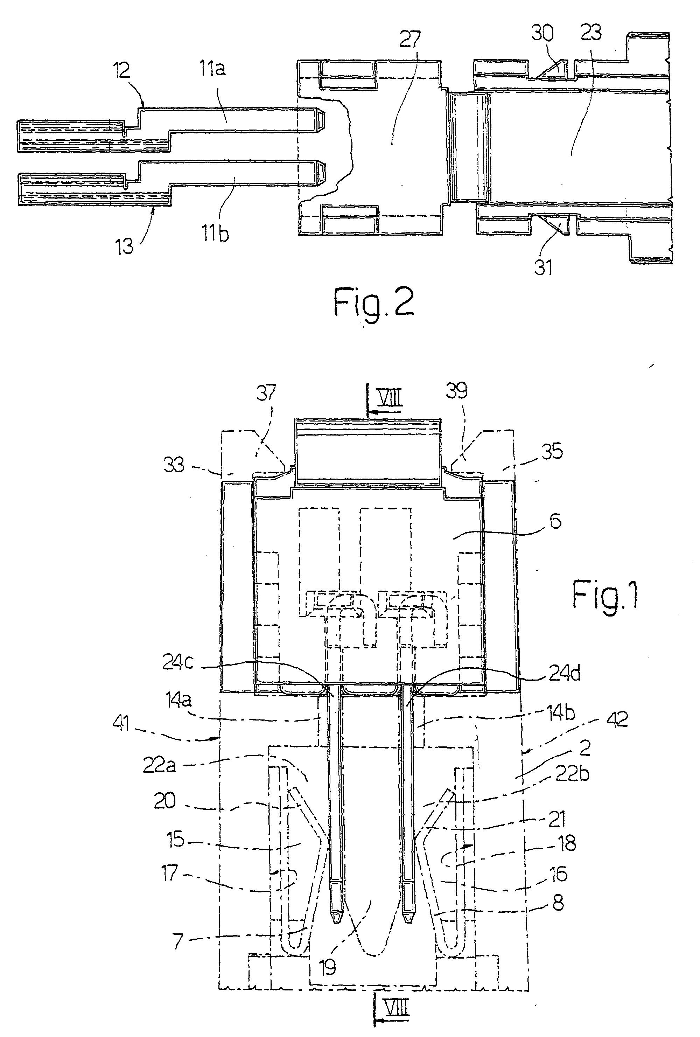

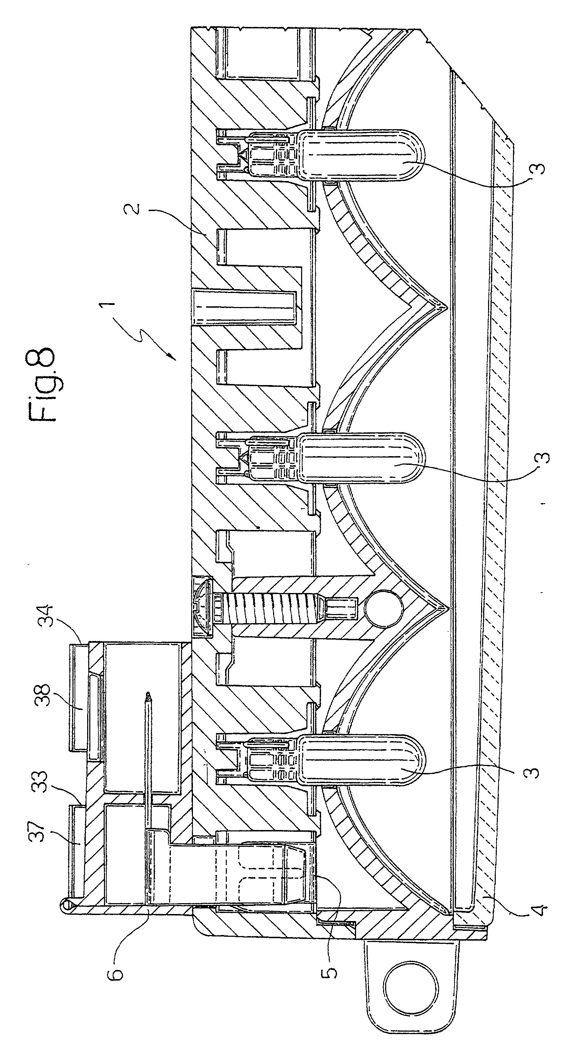

With reference to figures 1 and 8, 1 indicates as a whole a lighting device, which comprises a support body 2 (represented by a broken line), a plurality of lamps 3 supported by the support body, a lens 4, an internal supply circuit 5 which is connected electrically to the said lamps 3, and a device 6 for connection to an external supply line, which is not shown for the sake of convenience.

The connection device 6 comprises a pair of connection tabs 7 and 8, which are connected electrically to the internal supply circuit 5, and a connector body 9, which is provided with a first and a second socket 10 and 11, which are disposed at right-angles relative to one another.

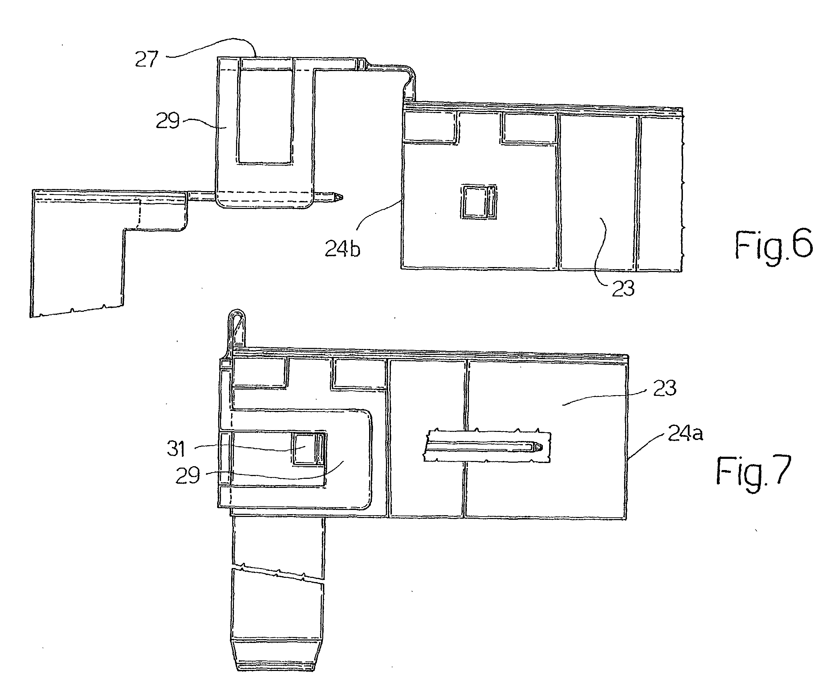

As illustrated in figures 1 to 7, the sockets 10 and 11 are provided respectively with a first and a second pair of plate contacts (the contacts of the first pair are indicated as 10a and 10b, whereas the contacts of the second pair are indicated as 11a and 11b).

The contacts 10a and 11a are integral with a first punched plate 12, whereas the contacts 10b and 11b are integral with a second punched plate 13 (figures 2, 4 and 5).

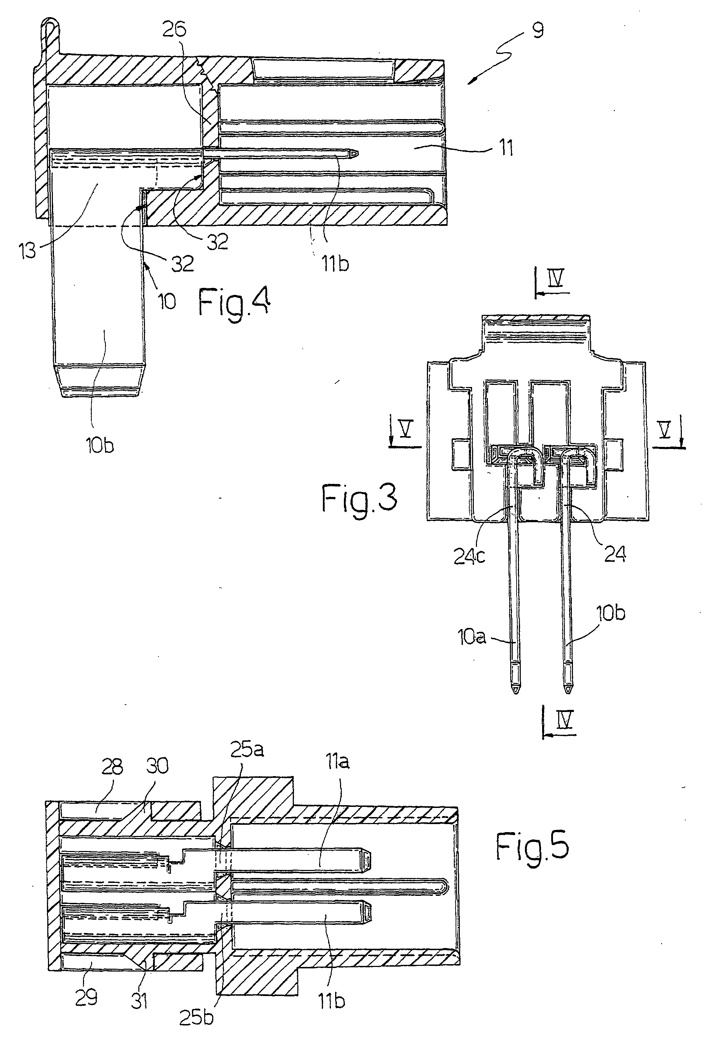

The punched plates 12 and 13 are substantially in the shape of an "L" (figure 4), such that the contacts 10a and 10b, and the contacts 11a and 11b are disposed at right-angles relative to one another.

The contacts 10a and 10b can be inserted in a removable manner in the support body 2, via respective slots 14a and 14b, in order to reach the connection tabs 7 and 8 (figures 1 and 8).

The connection tabs 7 and 8 are produced as extensions which are integral with the internal supply circuit 5, and are bent a first and a second time, such as to constitute resilient projections.

The tabs 7 and 8 are disposed inside respective seats 15 and 16, which are defined inside the support body 2, between walls 17 and 18 and a guide element 19, which extends integrally with the support body 2, parallel to the walls 14 and 15, and is produced from insulating material (figure 1).

When the connector body 9 is not in the position of use, the tabs 7 and 8 are disposed flush against the guide element 19.

Together with the guide element 19, the bent ends 20 and 21 of the tabs 7 and 8 form respective stress raisers 22a and 22b, for insertion of the plate contacts 10a and 10b.

In addition, the guide element 19 can receive in a sliding manner the plate contacts 10a and 10b, when the latter are inserted in the slots 14a and 14b.

In use, the plate contacts 10a and 10b are interposed between the guide element 19, and the connection tabs 7 and 8 respectively, with which they co-operate in a sliding manner, in order to connect electrically the internal supply circuit 5, and the external supply line. With reference to figures 1 to 7, the connector body 9 comprises a box-type body 23, with a substantially parallelepiped shape, in which there are provided a first and a second aperture 24a and 24b, in opposite surfaces of the box-type body 23.

The box-type body 23 is also provided with a pair of parallel through-guides 24c and 24d, in the vicinity of the second aperture 24b, on a surface which is adjacent to, and is disposed at right-angles relative to, the latter.

The punched plates 12 and 13 can be inserted respectively in the guides 24c and 24d, through the second aperture 24b, such that the contacts 10a and 10b project outside the first aperture 24a, by an extent which is sufficient to allow them to be inserted in the slots 14a and 14b.

The contacts 11a and 11b are inserted in additional slots 25a and 25b, which-are provided in a median wall 26 of the box-type body 23, and are disposed in the vicinity of the first aperture 24a, such as to be able to receive a corresponding connector, which is connected to the external supply line.

The box-type body 23 is also provided with a cover 27, which is connected to the body by means of a plastic hinge, and can close the second aperture 24b (figures 2, 4, 6 and 7).

The cover 27 is snapped on, by means of locking tabs 28 and 29, which are integral with the cover 27 itself, and corresponding teeth 30 and 31, which are supported by the boxtype body 23.

The cover 27 can also keep the said plate assembly retained against a stop portion 32 of the box-type body 23.

In use, the connector body 9 as a whole is held snapped against the support body 2, by means of a set of four locking tabs 33, 34, 35, which are provided with respective teeth 37, 38, 39.

These tabs 33 to 35 are integral with the support body 2, from which they extend upwards in a projecting manner.

The tabs are disposed adjacent to one another in pairs, edge-wise relative to opposite outer surfaces 41 and 42 of the support body 2 (figures 1 and 8).

In particular, the tabs 33 and 34 are disposed in the position of the wall 41, whereas the tabs 35 are disposed in the position of the wall 42.

In use, the plate contacts 10a and 10b are introduced into the slots 14a and 14b, through which they reach the connection tabs 7 and 8, such as to establish an electrical connection with the internal supply circuit 5.

The contacts 10a and 10b are inserted parallel to the direction determined by the slots 14a and 14b.

During the insertion operation, the locking tabs 33-36 bend towards the exterior, in order to permit passage of the box-type body 23, until the latter comes into contact with the support body 2.

When the box-type body 23 has reached its own position of use, the tabs 33-35 close, and keep the body snapped into this position by means of the respective teeth 37-39.

The socket 11 receives a corresponding connector of a known type, which is derived from the external electrical line, in order to complete the connection of the lighting device 1 to the socket.

Finally, it is apparent that modifications and variants which do not depart from the scope of the present invention, can be made to the lighting device 1. In particular, the sockets 10 and 11 can be disposed aligned, instead of at right-angles relative to one another.

Consequently, the pairs of contacts 10a, 10b and 11a, 11b can also be produced aligned, using flat plates.

In addition, the shape and number of the tabs for connection of the internal supply circuit 5 to the contacts 10a and 10b can be varied.

For example, it is possible to use two pairs of tabs which are produced as opposite resilient projections.

In this case, each of the contacts 10a and 10b is inserted between a corresponding pair of tabs, by which it is retained, such that the guide element 19 is superfluous.

## Claims

1. Lighting device (1), in particular a third stop light for vehicles, which comprises a support body (2), a plurality of lamps (3), which are supported by the said support body (2), a supply circuit (5), which is connected electrically to the said lamps (3), and a device (6) for connection to an external supply line; the said connection device (6) comprising connection means (7,8), which are electrically connected to the said supply circuit (5) and a connector body (9), which is provided with a first (10) and a second (11) socket disposed at an angle relative to one another, and comprising at least a respective first (10a,10b) and second (11a,11b) pair of contacts; **characterized in that** said supply circuit (5) is internal to said support body (2), the said at least first pair of contacts (10a,10b) being insertable, in a removable manner, into respective slots (14a,14b) in the said support body (2), in order to reach the said connection means (7,8); and wherein, in combination:
(i)- said connection means consist of connection tabs (7,8) ,disposed inside respective seats (15,16) defined inside said support body (2);
(ii)- said at least first and second pairs contacts (10a,10b;11a,11b) are plate contacts and are produced integrally to each other, respectively from a first (12) and second (13) punched plate;
(iii)- said connector body (9) comprises a box-type body (23) provided, in opposite surfaces thereof, with a first (24a) and a second (24b) aperture, and with a median wall (26); said box type body (23) being provided with through guides (24c,24d; 25a,25b) and said punched plates (12,13) realizing said plate contacts (10a,10b; 11a,11b) being inserted through said through guides (24c,24d; 25a,25b) such as the said first pair of contacts (10a,10b) projects to the exterior of said box type body (23) by an extent which is sufficient to allow the contacts (10a,10b) to be inserted into the said slots (14a,14b) of said support body (2); and such that said second pair (11a,11b) of contacts are disposed in the vicinity of the said first aperture (24a), such that they can receive a corresponding connector, which is connected to the said external supply line;
(iv)- said punched plates (12,13) being retained against a stop portion (32) of said box-type body (23), by a cover (27) of the said box-type body (23), which is connected to the latter by means of a hinge and is secured such that it closes the said second aperture (24b) by means of first snap-locking means.

2. Lighting device (1) according to claim 1, **characterised in that** the said first pair of plate contacts (10a,10b), and the said connection tabs (7,8), co-operate in a sliding manner, in order to connect electrically the said internal supply circuit (5) and the said external supply line.

3. Lighting device (1) according to one of the preceding claims, **characterised in that** the said support body (2) comprises a guide element (19), which is produced integrally from an electrically insulating material, and can receive flush against it the said connection tabs (7,8) in the absence of the said at least a first pair of plate contacts (10a,10b); the said guide element (19) also being able to receive in a sliding manner the said at least a first pair plate contacts (10a,10b) when the latter are inserted into the said slots (14a,14b) of said support body (2).

4. Lighting device (1) according to claim 3, **characterised in that** respective ends of the said tabs (7,8) are bent, in order, together with the said guide element (19), to form stress raisers for insertion of the said at least first pair of plate contacts (10a,10b).

5. Lighting device (1) according to any one of the preceding claims, **characterised in that** the said connection tabs (7,8) are produced integrally as an extension of the said internal supply circuit (5).

6. Lighting device (1) according to any one of the preceding claims, **characterised in that** the said at least a first (10a,10b) and second (11a,11b) pair of plate contacts are disposed such as to form a right-angle relative to one another.

7. Lighting device according to claim 6, **characterised in that** said punched plates (12,13) realizing said plate contacts (10a,b; 11a,b) are substantially in the shape of an "L"; a surface of said box-type body (23) which is adjacent to, and is disposed at right-angles relative to said second aperture (24b) being provided with a pair of parallel through-guides (24c,24d) in the vicinity of the said second aperture (24b); and said median wall (26) being provided with additional slots (25a,25b) therethrough; said punched plates (12,13) being inserted between the said pair of guides (24c,24d) and said additional slots (25a,25b) through the said second aperture (24b), and such that the said first pair of contacts (10a,10b) projects to the exterior of the said pair of guides (24c,24d), by an extent which is sufficient to allow the contacts (10a,10b) to be inserted into the said slots (14a,14b) of said support body (2); and such that said second pair (11a,11b) of contacts are inserted through said additional slots (25a,25b) so as to be disposed in the vicinity of the said first aperture (24a), such that they can receive a corresponding connector, which is connected to the said external supply line.

8. Lighting device (1) according to any one of the preceding claims, **characterised in that**, in use, the said connector body (9) is snap engaged against the said support body (2), by means of second snap locking means comprising a plurality of tabs which are produced integrally with the said support body (2).

## Patentansprüche

1. Beleuchtungsvorrichtung (1), insbesondere drittes Bremslicht für Fahrzeuge, die einen Haltekörper (2), mehrere Lampen (3), die von dem Haltekörper (2) gehalten werden, eine Versorgungsschaltung (5), die mit den Lampen (3) elektrisch verbunden ist, und eine Vorrichtung (6) zum Verbinden mit einer externen Versorgungsleitung umfaßt, wobei die Verbindungsvorrichtung (6) Verbindungsmittel (7, 8) umfaßt; die mit der Versorgungsschaltung (5) und mit einem Verbinderkörper (9) elektrisch verbunden sind, der mit einer ersten (10) und mit einer zweiten (11) Buchse versehen ist, die in einem Winkel zueinander angeordnet sind und wenigstens ein jeweiliges erstes (10a, 10b) und zweites (11a, 11b) Paar von Kontakten umfassen; **dadurch gekennzeichnet, daß** sich die Versorgungsschaltung (5) in dem Haltekörper (2) befindet und das wenigstens erste Paar von Kontakten (10a, 10b) herausnehmbar in jeweilige Schlitze (14a, 14b) in dem Haltekörper (2) einführbar ist, so daß es die Verbindungsmittel (7, 8) erreicht, und wobei:
(i) die Verbindungsmittel aus Verbindungszungen (7, 8) bestehen, die in jeweiligen Aufnahmen (15, 16) angeordnet sind, die in dem Haltekörper (2) definiert sind,
(ii) das wenigstens erste und das wenigstens zweite Paar von Kontakten (10a, 10b; 11a, 11b) Flachkontakte sind, die einteilig miteinander von einer ersten (12) bzw. von einer zweiten (13) ausgestanzten Platte hergestellt sind,
(iii) der Verbinderkörper (9) einen kastenförmigen Körper (23) enthält, der an seinen gegenüberliegenden Oberflächen mit einer ersten (24a) und einer zweiten (24b) Öffnung versehen ist und eine Mittelwand (26) aufweist, wobei der kastenförmige Körper (23) mit Durchführungen (24c, 24d; 25a, 25b) versehen ist und die ausgestanzten Platten (12, 13), die die Flachkontakte (10a, 10b; 11a, 11b) bilden, durch die Durchführungen (24c, 24d; 25a, 25b) eingeführt sind, so daß das erste Paar von Kontakten (10a, 10b) um eine Weite, die ausreicht, damit die Kontakte (10a, 10b) in die Schlitze (14a, 14b) des Haltekörpers (2) eingeführt werden können, in die äußere Umgebung des kastenförmigen Körpers (23) vorsteht, und wobei das zweite Paar (11a, 11b) der Kontakte in der Nähe der ersten Öffnung (24a) liegt, so daß sie einen entsprechenden Verbinder, der mit der externen Versorgungsleitung verbunden ist, aufnehmen können, und
(iv) die ausgestanzten Platten (12, 13) durch einen Verschluß (27) des kastenförmigen Körpers (23), der mit letzterem mittels eines Gelenks verbunden und an diesem befestigt ist, so daß er mittels eines ersten Schnappverschlußmittels die zweite Öffnung (24b) verschließt, gegen einen Halteabschnitt (32) des kastenförmigen Körpers (23) gehalten werden.

2. Beleuchtungsvorrichtung (1) nach Anspruch 1, **dadurch gekennzeichnet, daß** das erste Paar der Flachkontakte (10a, 10b) und die Verbindungszungen (7, 8) auf gleitende Weise zusammenwirken, um die interne Versorgungsschaltung (5) mit der externen Versorgungsleitung elektrisch zu verbinden.

3. Beleuchtungsvorrichtung (1) nach einem der vorangehenden Ansprüche, **dadurch gekennzeichnet, daß** der Haltekörper (2) ein Führungselement (19) enthält, das einteilig aus einem elektrisch isolierenden Material hergestellt ist und das in Abwesenheit des wenigstens ersten Paars der Flachkontakte (10a, 10b) bündig gegen sich die Verbindungszungen (7, 8) aufnehmen kann, und das Führungselement (19) außerdem auf gleitende Weise das wenigstens erste Paar von Flachkontakten (10a, 10b) aufnehmen kann, wenn diese in die Schlitze (14a, 14b) des Haltekörpers (2) eingeführt werden.

4. Beleuchtungsvorrichtung (1) nach Anspruch 3, **dadurch gekennzeichnet, daß** die jeweiligen Enden der Zungen (7, 8) gebogen sind, so daß sie zusammen mit dem Führungselement (19) Druckerhöher zur Einführung des wenigstens ersten Paars von Flachkontakten (10a, 10b) bilden.

5. Beleuchtungsvorrichtung (1) nach einem der vorangehenden Ansprüche, **dadurch gekennzeichnet, daß** die Verbindungszungen (7, 8) einteilig als Verlängerung der internen Versorgungsschaltung (5) hergestellt sind.

6. Beleuchtungsvorrichtung (1) nach einem der vorangehenden Ansprüche, **dadurch gekennzeichnet, daß** das wenigstens erste (10a, 10b) und das wenigstens zweite (11a, 11b) Paar von Flachkontakten in der Weise angeordnet sind, daß sie einen rechten Winkel zueinander bilden.

7. Beleuchtungsvorrichtung nach Anspruch 6, **dadurch gekennzeichnet, daß** die ausgestanzten Platten (12, 13), die die Flachkontakte (10a, b; 11a, b) realisieren, im wesentlichen die Form eines "L" haben, eine Oberfläche des kastenförmigen Körpers (23), die an die zweite Öffnung (24b) angrenzt und in rechtem Winkel in bezug auf diese liegt, in der Nähe der zweiten Öffnung (24b) mit einem Paar paralleler Durchführungen (24c, 24d) versehen ist, und die Mittelwand (26) mit zusätzlichen Schlitzen (25a, 25b) durch sie versehen ist, wobei die ausgestanzten Platten (12, 13) durch die zweite Öffnung (24b) zwischen das Paar der Führungen (24c, 24d) und die zusätzlichen Schlitze (25a, 25b) eingeführt sind, so daß das erste Paar der Kontakte (10a, 10b) um eine Weite, die ausreicht, damit die Kontakte (10a, 10b) in die Schlitze (14a, 14b) des Haltekörpers (2) eingeführt werden können, aus dem Paar der Führungen (24c, 24d) ins Äußere vorsteht, und so daß das zweite Paar (11a, 11b) der Kontakte durch die zusätzlichen Schlitze (25a, 25b) eingeführt ist, so daß es in der Nähe der ersten Öffnung (24a) angeordnet ist, so daß sie einen entsprechenden Verbinder, der mit der externen Versorgungsleitung verbunden ist, aufnehmen können.

8. Beleuchtungsvorrichtung (1) nach einem der vorangehenden Ansprüche, **dadurch gekennzeichnet, daß** der Verbinderkörper (9) im Gebrauch mittels eines zweiten Schnappverschlußmittels, das mehrere Zungen umfaßt, die einteilig mit dem Haltekörper (2) hergestellt sind, gegen den Haltekörper (2) eingeschnappt ist.

## Revendications

1. Dispositif d'éclairage (1), en particulier un troisième feu de stop pour véhicules, qui comporte un corps de support (2), une pluralité de lampes (3), qui sont supportées par ledit corps de support (2), un circuit d'alimentation (5), qui est connecté électriquement auxdites lampes (3), et un dispositif (6) pour une connexion à une ligne d'alimentation externe, ledit dispositif de connexion (6) comportant des moyens de connexion (7, 8), qui sont électriquement connectés audit circuit d'alimentation (5) et un corps de connecteur (9), qui est muni d'une première (10) et d'une seconde (11) prise disposées selon un angle l'une par rapport à l'autre, et comportant au moins une première (10a, 10b) et une seconde paire (11a, 11b) respectives de contacts, **caractérisé en ce que** ledit circuit d'alimentation (5) est interne audit corps de support (2), ladite au moins une première paire de contacts (10a, 10b) pouvant être insérée, d'une manière amovible, dans des fentes respectives (14a, 14b) dans ledit corps de support (2), afin d'atteindre lesdits moyens de connexion (7, 8), et dans lequel, en combinaison :
(i) -lesdits moyens de connexion sont constitués de pattes de connexion (7, 8), disposées à l'intérieur de bases respectives (15, 16) définies à l'intérieur dudit corps de support (2),
(ii) -lesdites au moins première et seconde paires de contacts (10a, 10b; 11a, 11b) sont des contacts de type plaque et qui sont produits en un seul bloc l'un avec l'autre, respectivement à partir d'une première (12) et d'une seconde (13) plaque perforée,
(iii) - ledit corps de connecteur (9) comporte un corps de type boîtier (23) muni, dans des surfaces opposées de celui-ci, d'une première (24a) et d'une seconde (24b) ouverture, et d'une paroi médiane (26), ledit corps de type boîtier (23) étant muni de guides traversants (24c, 24d ; 25a, 25b) et lesdites plaques perforées (12, 13) réalisant lesdits contacts de type plaque (10a, 10b; 11a, 11b) qui sont insérés à travers lesdits guides traversants (24c, 24d; 25a, 25b) de sorte que ladite première paire de contacts (10a, 10b) fait saillie vers l'extérieur dudit corps de type boîtier (23) sur une étendue qui est suffisante pour permettre aux contacts (10a, 10b) d'être insérés dans lesdites fentes (14a, 14b) dudit corps de support (2), et de sorte que ladite seconde paire (11a, 11b) de contacts est disposée à proximité de ladite première ouverture (24a), de sorte que les contacts peuvent recevoir un connecteur correspondant, qui est connecté à ladite ligne d'alimentation externe,
(iv) - lesdites plaques perforées (12, 13) étant retenues contre une partie d'arrêt (32) dudit corps de type boîtier (23), par un couvercle (27) dudit corps de type boîtier (23), qui est connecté à ce dernier par l'intermédiaire d'une articulation et est fixé de sorte qu'il ferme ladite seconde ouverture (24) par l'intermédiaire de premiers moyens de verrouillage à déclic.

2. Dispositif d'éclairage (1) selon la revendication 1, **caractérisé en ce que** ladite première paire de contacts de type plaque (10a, 10b), et lesdites pattes de connexion (7, 8), coopèrent d'une manière coulissante, afin de connecter électriquement ledit circuit d'alimentation interne (5) et ladite ligne d'alimentation externe.

3. Dispositif d'éclairage (1) selon l'une quelconque des revendications précédentes, **caractérisé en ce que** ledit corps de support (2) comporte un élément de guidage (19), qui est produit en un seul bloc à partir d'un matériau électriquement isolant, et qui peut recevoir de manière affleurée contre celui-ci lesdites pattes de connexion (7, 8) en l'absence de ladite au moins une première paire de contacts de type plaque (10a, 10b), ledit élément de guidage (19) étant également capable de recevoir d'une manière coulissante ladite au moins une première paire de contacts de type plaque (10a, 10b) lorsque ces derniers sont insérés dans lesdites fentes (14a, 14b) dudit corps de support (2).

4. Dispositif d'éclairage (1) selon la revendication 3, **caractérisé en ce que** des extrémités respectives desdites pattes (7, 8) sont courbées, afin, ensemble avec ledit élément de guidage (19), de former des éléments augmentant la contrainte pour une insertion de ladite au moins une première paire de contacts de type plaque (10a, 10b).

5. Dispositif d'éclairage (1) selon l'une quelconque des revendications précédentes, **caractérisé en ce que** lesdites pattes de connexion (7, 8) sont produites en un seul bloc sous forme d'une extension. dudit circuit d'alimentation interne (5).

6. Dispositif d'éclairage (1) selon l'une quelconque des revendications précédentes, **caractérisé en ce que** lesdites au moins première (10a, 10b) et seconde (11a, 11b) paires de contacts de type plaque sont disposées de manière à former un angle droit l'une par rapport à l'autre.

7. Dispositif d'éclairage selon la revendication 6, **caractérisé en ce que** lesdites plaques perforées (12, 13) réalisant lesdits contacts de type plaque (10a, b; 11a, b) ont essentiellement la forme d'un "L", une surface dudit corps de type boîtier (23) qui est adjacente à ladite seconde ouverture (24b), et qui est disposée à angle droit par rapport à celle-ci, étant munie d'une paire de guides traversants parallèles (24c, 24d) à proximité de ladite seconde ouverture (24b), et ladite paroi médiane (26) étant munie à travers celle-ci de fentes supplémentaires (25a, 25b), lesdites plaques perforées (12, 13) étant insérées entre ladite paire de guides (24c, 24d) et lesdites fentes supplémentaires (25a, 25b) à travers ladite seconde ouverture (24b), et de sorte que ladite première paire de contacts (10a, 10b) fait saillie vers l'extérieur de ladite paire de guides (24c, 24d), sur une étendue qui est suffisante pour permettre aux contacts (10a, 10b) d'être insérés dans lesdites fentes (14a, 14b) dudit corps de support (2), et de sorte que ladite seconde paire (11a, 11b) de contacts sont insérés à travers lesdites fentes supplémentaires (25a, 25b) de manière à être disposés à proximité de ladite première ouverture (24a), de sorte qu'ils peuvent recevoir un connecteur correspondant, qui est connecté à ladite ligne d'alimentation externe.

8. Dispositif d'éclairage (1) selon l'une quelconque des revendications précédentes, **caractérisé en ce que**, en utilisation, ledit corps de connecteur (9) est en prise par enclenchement contre ledit corps de support (2), par l'intermédiaire de seconds moyens de verrouillage à déclic comportant une pluralité de pattes qui sont produites en un seul bloc avec ledit corps de support (2).
